# EUROPEAN PATENT APPLICATION

(11) **EP 3 540 951 A1**
(43) Date of publication of application: **18.09.2019**
(21) Application number: 18161936.2
(22) Date of filing: 15.03.2018
(51) Int. Cl.: H04B 1/3888

(54) **PROTECTION DEVICE FOR LOW-POWER CELLULAR RADIO COMPONENTS**

(71) Applicant: Spinner GmbH, 80335 München (DE)
(72) Inventor: STIGLMAYR, Roland, 83059 Kolbermoor (DE)
(74) Representative: Lohr, Jöstingmeier & Partner

(57) **Abstract**

A RF protection device for protecting low power components connected to a base station has a coupler connected to a power measuring circuit and a switch in a signal path. The power measuring circuit has a peak detector, which sends an off-signal to the switch, if a predetermined power level has been reached. A fast peak detector and a fast switch allow immediate disconnection of the low power components in a failure case. An additional microcontroller is provided to manage the protection device and to provide low speed control functions. It may control the switch for a permanent disconnection, even if the power level has decreased, or it may give an error indication to a user or a central control unit.

## Description

### Field of the invention

The invention relates to a protection device used with base stations for a wireless communication system.

### Description of the related art

A wireless communication unit is disclosed in EP 1432 132 B1. The output power of a power amplifier is measured by a directional coupler and used to control the power by a feedback loop.

US 6,748,194 B2 discloses a repeater system having an automatic reverse output disabling function. Here, the output power of a power amplifier is measured via a coupler to trigger a set of threshold detectors. Upon reaching a certain threshold, a switch is triggered to enable and/or disable the transmitter output.

In some applications, remote antennas as well as low power combining networks which are used to drive multiple remote antennas, are fed by a base station or a plurality of interconnected base stations. Here, the output power of the individual base stations is set to a lower power level. Under certain circumstances, like an incorrect adjustment of the base stations or caused by a technical failure, a comparatively high RF power may be fed into the low power components.

### Summary of the invention

The problem to be solved by the invention is to provide a device and a method to prevent an overload of the low power components which may lead to damages or even destruction of these low power components.

Solutions of the problem are described in the independent claims. The dependent claims relate to further improvements of the invention.

One or a plurality of base stations may be connected to low power components. Such low power components may be surface acoustic wave (SAW) filters or ceramic filters, and/or an optical component (fiber transmitter). A typical power limit of a SAW filter is +20 dBm (100 mW). Typical standard base stations are designed to deliver a power of +40 dBm (10 W or more). For operating such a base station with a low power component, it is necessary to limit the power output of the base station either by configuring (e.g. software setting) the maximum output power level of the base station and/or by inserting an attenuator between the base station and the low power component. If such a base station is incorrectly configured or the attenuator is omitted or has an insufficient attenuation, a low power component may be destroyed.

In a first embodiment, a flexible and universal protection device is provided. The protection device has an input and an output and provides a signal path therebetween. Preferably, the input and the output each have a coaxial connector. The protection device has a coupler and a switch in the signal path. Preferably, the coupler may be a directional coupler or a capacitive coupler. The coupler has an input port which is preferably connected to the protection device input. The coupler further has a coupled port which provides a portion (or fraction) of the power from the input port. Finally, the coupler has a transmitted port for essentially outputting the power from the input port, less the power of the coupled port. The power of the coupled port is forwarded to a power measurement circuit, as will be described later. The power of the transmitted port is coupled to a switch which is further connected to the output of the protection device and may be connected to a load, like a low power component as described above. Basically, the sequence of the switch and the coupler may be exchanged, such that the switch is connected to the input port and the coupler is connected to the output port. But in this case no power can be measured, when the switch is off.

The switch has at least an "on" state and an "off" state. It preferably is a series switch, a parallel switch, or a combination of both. The switch may be based on RF transistors, preferably in GaN technology or PIN diodes. There may be a switch driver for adapting the signal level from the power measurement circuit to a level which is required to operate the switch. Independently of the specific function of the switch, in this document the term "off" means that there is no signal transfer between the input and the output of the switch. Such an off state may be realized by opening the connection or by providing a short circuit, e.g. grounding the signal, or both at the same time. The state "on" as mentioned herein refers to a state where the signal is delivered from the input to the output. In the case of a series switch, this means that the switch is closed and any short circuits or ground connections are open.

In the "on" state, there is a signal path from the base station to the low power components. Therefore, no power is reflected back to the base station. In a first embodiment, the switch is designed such, that in an "off" state, the signal to the low power components is interrupted and/or the switch output is disconnected from the switch input, but a termination for the base station is provided. This means that the signal of the base station is absorbed by a dummy load and still no power is reflected back to the base station. Therefore, the base station is working normally, but no signal is provided to the low power components. In another embodiment, the switch is designed such, that in an "off" state, the signal to the low power components is interrupted and/or the switch output is disconnected from the switch input by short circuiting and/or opening the signal path from the base station. Therefore, the power from the base station is reflected back to the base station. Normally, the base station may disable its output and indicate an error.

The power measurement circuit receives a signal from the coupled port of the coupler. Most preferably, this signal is proportional to the input signal of the protection device. The power measurement circuit contains means for evaluating the signal from the coupler. Preferably, it includes a peak detector. The peak detector disclosed herein basically is a circuit for detecting signal peaks exceeding a certain limit value. Such a peak detector may either be a normal peak detector e.g. a diode charging a capacitor coupled and/or a fast comparator. The peak detector may also comprise a fast comparator which should be able to detect even short peaks in the signal. It is preferred, if the response time of the fast comparator is in the order of magnitude of the period time of the signal. Preferably, the power measurement circuit delivers a signal to the switch for switching off when a peak at the input signal has been detected. Furthermore, the power measurement circuit preferably has a hold function to maintain the switch in an "off" condition, if a peak at the input signal has been detected.

The power measurement circuit preferably comprises means for controlling the switch. Preferably, the switch controlling means provides a signal to the switch for switching off and therefore interrupting the signal path between the protection device input and the protection device output, such that no high power levels are delivered to the low power components. Preferably, the switch controlling means has the only function to hold the switch in an opened state until a switch reset signal is issued. Alternatively, there may be a timer means for holding the switch in an open state for a certain period.

A device control unit may be provided for management of the protection device, preferably with low speed control functions. Preferably, the device control unit comprises at least one microcontroller. The device control unit basically controls the power measurement circuit. It may provide a threshold signal which determines the value of the signal from the coupler above which the switch is opened. It may also provide a reset signal for closing the switch or a specific open signal for opening the switch. It may further provide a time setting signal for setting the delay time the switch is kept opened until it may be closed again.

Preferably, there is at least one signal line for signaling to the device control unit at least one status information from the power measurement circuit. Such a status information may be the switch status.

There may be a user interface connected to the device control circuit. Such a user interface may either comprise a bus or network interface and/or a display means like a display and/or input means like switches or a keyboard.

In a very simple embodiment, the whole configuration is stored and/or contained within the power measurement circuit and/or the device control circuit. There may be a fixed, predetermined threshold for switching off the switch and a certain predetermined time for switching on the switch again. Alternatively, the switch may be switched on again after a power reset of the device. An additional feature may be an indicator like an LED for indicating the switching status of the switch. For example, if the switch is "off", a warning light may indicate this status. In a further embodiment, the device control circuit may have a network interface like an Ethernet controller or any other network or bus controller, by which it can communicate to an external computer or an external control device, for example via a web interface which may allow to read the status and to configure the settings and parameters of the device and preferably to reset an "off" switch to an "on" state. In a further embodiment, a display like an LCD display and/or a keyboard and/or a touch-sensitive display may be provided for varying and configuring the device. Of course, any combinations of these may be provided.

To provide an extremely fast switching response after a high RF signal level has been detected, it is preferred to have a direct connection between the power measurement circuit and the switch. If a signal from the fast comparator would be handled by the microcontroller, there would be a significant delay of at least some microseconds which may lead to a destruction of the low power components. To obtain the best possible protection, the signal chain is designed for minimal delay. Therefore, the peak detector and/or the comparator in the power measurement circuit should be very fast by using RF components. Furthermore, there should be a direct connection to the switch including the lowest possible number of components in the switch controlling means and the optional switch driver.

In a further embodiment based on the first embodiment the coupler and the switch are exchanged. The switch is connected to the protection device input and the coupler is connected to the protection device output. Therefore, the switch is in front of the coupler, such that the switch may protect the coupler from overloads.

A further embodiment relates to a method of protecting low power devices connected to a base station. The method includes measuring of the power delivered by the base station by means of a coupler and forwarding the power via a switch to the load. The method further includes the steps of detecting, whether the input power exceeds a certain threshold level and generating a switch off signal for the switch. In a next step, the switch will switch off and interrupt the connection between the base station and the load. Further steps include storing of the signal, e.g. of the information that an excessive power level was detected, and continuing to signal the switch an "off" state, such that the switch remains in an "off" state. Further optional steps include forwarding a status signal to a device control circuit. In response to this signal, the device control circuit may either extend the period in which the switch gets the "off" signal, or it may reset the switch signal to an "on" status. Further method steps are according to the details mentioned above.

A further embodiment relates to a communication system comprising at least a base station, the protection device as mentioned above, and a load for preferably comprising some low power components, wherein the load is connected to the base station via the protection device. In a further embodiment, a plurality of base stations may be interconnected together.

The protection device does not perform a clipping function like a normal signal limiter does. Instead, it disconnects the load permanently or at least one for a certain period of time after a signal overload has been detected.

### Description of Drawings

In the following the invention will be described by way of example, without limitation of the general inventive concept, on examples of embodiment with reference to the drawings.
Figure 1 shows a preferred embodiment
Figure 2 shows a further embodiment

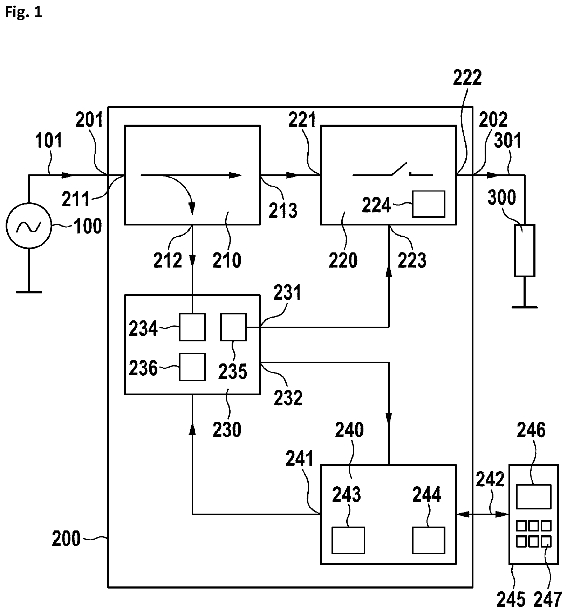

In figure 1, a preferred embodiment is shown. A protection device 200 has a protection device input 201 and a protection device output 202. The protection device input 201 may be connected via a first line 101 to a base station 100. Such base station may comprise or may be a power amplifier delivering an RF signal. Connected to the protection device output 202 may be a load which may further be a low power component. Such low power components may be SAW filters, ceramic filters, and/or optical components, or others. These low power components may be connected via a second line 301.

The protection device 200 includes at least a coupler 210 and a switch 220 in the signal path between the protection device input 201 and the protection device output 202. A signal arriving at the protection device input 201 is received by the input port 211 of the coupler and is forwarded to the transmitted port 213 of the coupler. From there it is coupled into the switch input 221 of the switch 220. The switched signal is then coupled via the switch output 222 to the protection device output 202. The switch may include a switch driver 224 for adapting the signal levels which may be required to control the switch. The switch has a switch control input 223 which may be a simple digital input to control the status of the switch, e.g. to define whether the switch is "on".

A small fraction of the signal at the input port 211 of coupler 210 is output via the coupled port 212. Coupling may be done via a directional coupler or a capacitive coupler or any other suitable coupling means which provide a signal preferably proportional to the input signal. The signal from the coupled port 212 is forwarded to a power measurement circuit 230. This power measurement circuit measures the power at the protection device input 201 by evaluating the signal from the coupled port 212 and generates a switch control signal at switch control output 231 to switch the switch 220 off, if a predetermined power is exceeded. For this purpose, the power measurement circuit may have a peak detector 234 and/or a fast comparator. There may also be a fast comparator for detecting high signal levels and for generating a switch control output signal. There may also be a switch controlling means 235 for modifying the switch control signal.

The power measurement circuit 230 may comprise a memory or storage means 236 which keeps the switch status at "off" if even only a short high power pulse has been detected. This may also be combined with a timing means to automatically reset, e.g. switch the switch on after a certain time.

The power measurement circuit 230 preferably has at least one power indication output 232 to signal the status to a device control circuit. There may also be a bus system or any other communication means between the power measurement circuit 230 and the device control circuit 240.

The device control circuit 240 preferably comprises a microcontroller 243 and controls the function of the power measurement circuit. For example, it may provide threshold values for the input signal above which the switch is opened. It may also provide timing values for an automatic reset of the switch or it may reset itself (close the switch) after a certain time or after a reset signal was received. Preferably, the device control circuit 240 has a connection 242 of user interface signals to a user interface 245. Such a user interface may comprise a display 246 and/or keyboard 247 and/or further indicators or control means.

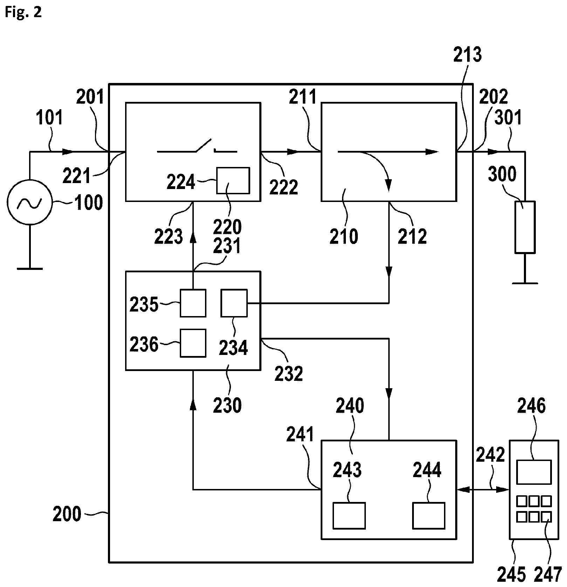

In figure 2, a further embodiment is shown. It is based on the first embodiment with the coupler 210 and the switch 220 exchanged. Now the switch 220 is connected to the protection device input 201 and the coupler 210 is connected to the protection device output 202. Therefore, the switch 220 is in front of the coupler 210, such that the switch may protect the coupler from overloads. This may allow to use a low power coupler with a similar rating as the load 300.

### List of reference numerals

- 100: base station
- 101: first line
- 200: protection device
- 201: protection device input
- 202: protection device output
- 210: coupler
- 211: input port
- 212: coupled port
- 213: transmitted port
- 220: switch
- 221: switch input
- 222: switch output
- 223: switch control input
- 224: switch driver
- 230: power measurement circuit
- 231: switch control output
- 232: power indication output
- 234: peak detector / comparator
- 235: switch controlling means
- 236: memory/timing means
- 240: device control circuit
- 241: power measurement circuit control output
- 242: user interface signals
- 243: Microcontroller
- 244: network interface
- 245: user interface
- 246: display
- 247: keyboard
- 300: low power components or load
- 301: second line

## Claims

1. RF protection device (200) comprising a signal path between an input (201)
and an output (202),
the protection device (200) including a coupler (210) and a switch (220) in the signal path,
the coupler (210) including a coupled port (212) configured to provide an output of a fraction of a signal in the signal path, the coupled port (212) being connected to a power measurement circuit (230),
the power measurement circuit (230) having a switch control output (231) being connected to a switch control input (223) of the switch (220),
the power measurement circuit (230) further comprising a peak detector (234) configured to generate a signal at the switch control output (231), if the output of the coupled port (212) exceeds a predetermined threshold value,
the switch (220) being configured to interrupt the signal path upon receiving such a signal,
the power measurement circuit (230) further comprising at least one memory/timing means (236) configured to hold the signal for a predetermined time or until a reset signal is asserted.

2. RF protection device (200) according to any of the previous claims,
**characterized in, that**
the coupler (210) comprises an input port (211) connected to the input (201) and a coupled port (212) connected to a switch input (221) of the switch (220) wherein the switch (220) comprises a switch output (222) which is further connected to the output (202).

3. RF protection device (200) according to any of the previous claims,
**characterized in, that**
the switch (220) comprises a switch input (221) connected to the input (201) and a switch output (222) connected to an input port (211) of the coupler (210) wherein the coupler (210) comprises a coupled port (213) which is further connected to the output (202).

4. RF protection device (200) according to any of the previous claims,
**characterized in, that**
the peak detector (234) includes a comparator.

5. RF protection device (200) according to any of the previous claims,
**characterized in, that**
a device control circuit (240) is at least connected to the power measurement circuit (230).

6. RF protection device (200) according to claim 5,
**characterized in, that**
the device control circuit (240) comprises a microcontroller.

7. RF protection device (200) according to any one of claims 5 to 6,
**characterized in, that**
the device control circuit (240) is at least connected to the power measurement circuit (230) by a bus.

8. RF protection device (200) according to any one of claims 5 to 7,
**characterized in, that**
the device control circuit (240) is configured to provide a reset signal to the switch for connecting the switch input (221) with the switch output (222).

9. RF protection device (200) according to any one of claims 5 to 8,
**characterized in, that**
the device control circuit (240) is configured to provide a threshold value and/or a time value to the power measurement circuit (230).

10. RF protection device (200) according to any one of claims 5 to 9,
**characterized in, that**
the device control circuit (240) is connected to a user interface (245), the user interface preferably comprising data entry means (247) and/or display or indicator means (246).

11. RF protection device (200) according to any one of claims 5 to 10,
**characterized in, that**
the device control circuit (240) and/or the user interface (245) comprise a network or bus interface (244).

12. RF protection device (200) according to any of the previous claims,
**characterized in, that**
the switch (220) has an "on" state providing a signal path between a switch input (221) and a switch output (222) and an "off" state in which the signal path is interrupted.

13. RF protection device (200) according to claim 12,
**characterized in, that**
the switch (220) has a short circuit or an open circuit at the switch input (221) in an "off" state.

14. RF protection device (200) according to any of the previous claims,
**characterized in, that**
the switch (220) may comprise at least one of a PIN diode or a RF transistor.
